Europäisches Patentamt

European Patent Office

Office européen des brevets

(11) Numéro de publication : **0 435 795 A1**

(12) # DEMANDE DE BREVET EUROPEEN

(21) Numéro de dépôt : **90420574.7**

(51) Int. Cl.⁵ : **A01D 34/73**

(22) Date de dépôt : **27.12.90**

(30) Priorité : **28.12.89 FR 8917576**

(43) Date de publication de la demande :
**03.07.91 Bulletin 91/27**

(84) Etats contractants désignés :
**AT BE CH DE DK ES GB GR IT LI LU NL SE**

(71) Demandeur : **SPEED FRANCE**
**651 Avenue de la Plage**
**F-69400 Villefranche Sur Saône (FR)**

(72) Inventeur : **Legrand, Emmanuel**
**Villeneuve**
**F-01480 Jassans Riottier (FR)**

(74) Mandataire : **Bratel, Gérard et al**
**Cabinet GERMAIN & MAUREAU B.P. 3011**
**F-69392 Lyon Cédex 03 (FR)**

(54) **Fil de coupe multiple pour débroussailleuses et taille-bordures.**

(57)   L'invention concerne les fils tranchants qui équipent des appareils de motoculture utilisés pour couper l'herbe, faucher et débroussailler. Elle propose un fil multiple, constitué d'au moins deux fils élémentaires ou "brins" (1,2,3) liés longitudinalement les uns aux autres de façon séparable par au moins une partie mince déchirable (4,5). Le fil multiple forme ainsi, dans son état initial, une genre de bande plate ou de ruban (6), pouvant être enroulé sur une bobine (7) dont la largeur entre joues correspond à celle de la bande (6), tandis que ses fils élémentaires ou "brins" (1,2,3), une fois séparés sur une certaine longueur, constituent une pluralité d'éléments coupants.

FIG.1

EP 0 435 795 A1

# FIL DE COUPE MULTIPLE POUR DEBROUSSAILLEUSE ET TAILLE-BORDURES

La présente invention concerne un fil de coupe multiple, destiné aux appareils de motoculture appelés communément débroussailleuses et taille-bordures, qui sont utilisés pour couper l'herbe, faucher et débroussailler.

Les débroussailleuses et les taille-bordures sont utilisés pour rendre propres et nets des terrains difficiles d'accès pour les tondeuses traditionnelles, tels que fossés, bordures de murs ou de clôtures ou de haies, espaces situés entre des dalles et autour d'arbres, de piquets ou d'obstacles, sol se trouvant sous les glissières de sécurité du réseau routier, ainsi que sur tous terrains accidentés, en pente ou caillouteux. Ces appareils intéressent donc les paysagistes, les services de voirie urbains et ruraux, l'agriculture et toutes les personnes chargées de l'entretien des parcs et jardins.

Les appareils en question sont équipés généralement de moteurs thermiques ou électriques, et parfois de moteurs pneumatiques, qui actionnent une tête rotative. Cette tête supporte, et entraîne en rotation, un ou plusieurs fils synthétiques, métalliques ou métalloplastiques qui, sous l'effet de la force centrifuge, ont un effet tranchant sur la végétation rencontrée sur leur trajectoire. Les fils de coupe sont le plus souvent de section ronde, mais ils peuvent aussi être de section carrée, triangulaire, en étoile, etc. pour offrir des arêtes tranchantes augmentant leur efficacité.

Bien que très résistants aux chocs et à l'abrasion, ces fils s'usent en cours d'utilisation et constituent un produit consommable qu'il convient, par conséquent, de renouveler et de remplacer. Suivant la largeur de coupe désirée et les recommandations du constructeur de l'appareil, l'utilisateur extrait de la tête rotative un, deux ou trois brins, parfois quatre brins de longueurs égales, par exemple d'environ 15 cm. Cette opération est renouvelée aussi souvent qu'il est nécessaire, jusqu'à épuisement du ou des fils contenus dans une ou des bobines logées dans la tête. L'utilisateur procède alors au rechargement complet de la tête.

C'est en cours d'utilisation et lors des opérations de rechargement, telles qu'évoquées ci-dessus, qu'apparaissent les inconvénients des débroussailleuses et taille-bordures ; ces inconvénients sont développés ci-après en prenant l'exemple le plus courant d'une tête de débroussailleuse équipée d'une seule bobine contenant deux fils de coupe de section ronde, tels que des fils de polyamide :

– Pour le chargement ou le rechargement, l'utilisateur extrait de la tête la bobine, et il enroule sur celle-ci deux fils qui, de par leur conditionnement initial en bobines ou anneaux, se présentent sous la forme de spires assez raides. L'effet de ressort qui s'en suit rend l'enroulement des fils sur la bobine difficile et long, d'où une perte de temps considérable.

– De par l'effet de ressort de ces spires, il est particulièrement difficile de maîtriser deux longueurs identiques de fils, et la partie la plus longue se trouve perdue.

– Les fils ainsi enroulés sont mal "rangés". La longueur de fil mise en place est bien inférieure à la capacité réelle de la bobine, ce qui oblige à faire des rechargements plus fréquents.

– Pour la même raison, il se produit en cours de rotation de la tête des phénomènes de balourd qui engendrent des vibrations préjudiciables à l'appareil et dangereuses pour l'utilisateur.

– Sous l'effet d'une violente sollicitation de l'un des brins en cours d'utilisation, par exemple en cas de chocs contre des arbustes ou des cailloux, l'un des fils peut se coincer dans les spires ou s'entremêler, et le blocage qui en résulte interdit tout déroulement supplémentaire. La remise en état de marche exige le démontage de la tête pour extraire le brin coincé, d'où une perte de temps.

– Si pour une cause semblable l'un des fils casse au ras d'un oeillet de sortie, le démontage de la tête s'impose également, pour permettre à l'opérateur d'extraire une nouvelle longueur du brin cassé, et couper le second brin à la même longueur ; il en résulte là aussi une perte de temps, ainsi qu'une perte de fil.

La présente invention vise à éliminer tous les inconvénients précédemment exposés, en fournissant un fil de coupe perfectionné pour débroussailleuses et taille-bordures, ce fil procurant une grande facilité d'utilisation, un gain de temps appréciable et une économie de fil, donc une amélioration sensible de la productivité des appareils en question, tout en offrant une sécurité accrue.

A cet effet, l'invention a essentiellement pour objet un fil de coupe multiple pour débroussailleuses et taille-bordures, qui est constitué d'au moins deux fils élémentaires ou "brins" liés longitudinalement les uns aux autres de façon séparable par au moins une partie mince déchirable, de manière à former dans son état initial un genre de bande plate ou de ruban, apte à être enroulé en spirale sur une bobine réceptrice, dont la largeur entre joues correspond à celle de ladite bande ou dudit ruban, tandis que ses fils élémentaires ou "brins", une fois séparés sur une certaine longueur, sont aptes à constituer une pluralité d'éléments coupants.

Ainsi, l'invention propose un produit se présentant sous la forme d'une bande ou d'un ruban, constitué de plusieurs fils élémentaires parallèles et initialement solidaires les uns des autres, les extrémités de ces fils élémentaires pouvant toutefois être séparées lors de leur mise en place sur la tête rotative de l'appareil, de manière à disposer de deux ou plusieurs brins coupants, équivalents de ceux fournis traditionnellement par des fils distincts.

Le fil de coupe multiple, objet de l'invention, offre des avantages nombreux et importants :

— L'enroulement de ce fil multiple en bande ou en ruban, sur une bobine, est particulièrement aisé si bien que le chargement ou le rechargement des débroussailleuses et taille-bordures devient une opération beaucoup plus rapide à exécuter.

— Les fils élémentaires enroulés sur la bobine étant solidaires, leurs longueurs sont strictement identiques et il n'y a pas de perte de longueur de fil.

— Le ruban est, de façon pratiquement automatique, convenablement enroulé en spirale sur la bobine, les fils élémentaires parallèles et liés entre eux se trouvant nécessairement "rangés" ; la capacité de la bobine est ainsi entièrement utilisée et les rechargements sont moins fréquents.

— En raison de la régularité de l'enroulement du fil multiple, l'équilibrage en rotation est toujours correct et il n'y a plus de balourd.

— Les risques de croisement, de coincement ou d'entremêlement des fils, sous l'effet d'une tension accidentelle, sont entièrement supprimés par la liaison entre ces fils et par leur rangement.

— Si l'un des fils élémentaires casse au ras de l'oeillet de sortie correspondant, il suffit de tirer l'extrémité libre de l'autre fil, ou de l'un des autres fils, pour faire ressortir le fil cassé, l'un des fils entraînant automatiquement en avant le ou les autres fils qui lui sont liés. Dans le cas d'un tel incident, la remise en état de marche peut ainsi être faite sans ouvrir la tête, donc de façon commode et rapide.

Par ailleurs, la configuration du produit selon l'invention permet un conditionnement de celui-ci particulièrement simple, économique et pratique d'utilisation, sous forme de bande plate ou de ruban enroulé en spirale sur lui-même, donnant une "galette" qui peut être notamment placée dans un emballage du type "blister" constituant lui-même un dévidoir, aucune bobine n'étant nécessaire. Les fils élémentaires étant initialement liés longitudinalement les uns aux autres, il est à noter aussi qu'en coupant transversalement la bande ou le ruban formé par l'ensemble de ces fils, l'on obtient automatiquement des tronçons de fils élémentaires qui sont tous de même longueur.

Dans sa forme la plus simple, le produit objet de l'invention comprend seulement deux fils élémentaires ou "brins", liés longitudinalement l'un à l'autre par une unique partie mince déchirable de manière à former un genre de bande plate ou de ruban. Ce produit peut aussi comprendre au moins trois fils élémentaires ou "brins", liés longitudinalement entre eux, deux à deux, par au moins deux parties minces déchirables situées sensiblement dans le même plan, de manière à former un genre de bande plate ou de ruban, le principe de l'invention étant applicable à un nombre quelconque de fils élémentaires.

Le fil multiple objet de l'invention peut être obtenu directement par un procédé d'extrusion fournissant simultanément tous les fils élémentaires et au moins un film ou voile mince déchirable liant ces fils élémentaires longitudinalement les uns aux autres de manière à former un genre de bande plate ou de ruban, ceci notamment dans le cas d'un produit en matière synthétique. Toutefois, le produit peut aussi être réalisé à partir de fils élémentaires initialement séparés, qui sont liés longitudinalement les uns aux autres par une opération d'assemblage telle que collage ou soudage de manière à former un genre de bande plate ou de ruban. Dans tous les cas, la liaison entre les fils élémentaires est prévue suffisamment faible, de sorte que ces fils élémentaires puissent être séparés les uns des autres manuellement, sans l'aide d'outils et avec un effort modéré, pour être enfilés au travers des différents oeillets de sortie de la tête rotative.

De toute façon, l'invention sera mieux comprise à l'aide de la description qui suit, en référence au dessin schématique annexé représentant, à titre d'exemples non limitatifs, quelques formes de réalisation de ce fil de coupe multiple pour débroussailleuses et taille-bordures :

Figure 1 est une vue en perspective montrant un fil de coupe multiple conforme à la présente invention, enroulé sur une bobine, les extrémités des brins de ce fil étant séparées ;

Figure 2 est une vue en coupe transversale d'un fil de coupe selon l'invention à deux brins ;

Figure 3 est une vue en coupe transversale d'un fil de coupe selon l'invention à trois brins ;

Figure 4 est une vue en coupe transversale d'un fil de coupe selon l'invention à quatre brins ;

Figure 5 est une vue éclatée d'une tête rotative de débroussailleuse ou de taille-bordures, recevant une recharge de fil de coupe multiple conforme à l'invention.

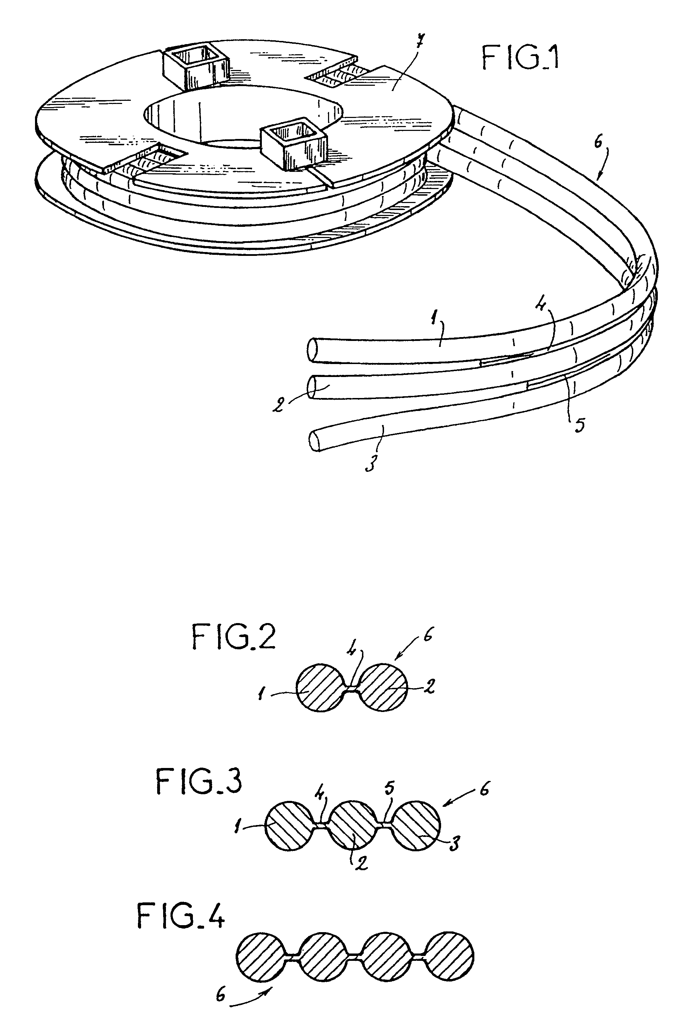

Comme le montre la figure 1, ainsi que la figure 3, un fil de coupe selon l'invention comprend par exemple trois fils élémentaires ou "brins" désignés respectivement 1,2 et 3, ici tous de section ronde et de diamètres égaux. Le premier brin 1 est lié longitudinalement au deuxième brin 2 par un voile mince de matière déchirable 4. Le deuxième brin 2 est lié longitudinalement au troisième brin 3 par un autre voile mince de matière déchirable 5.

Les deux voiles minces de matière 4 et 5 se situant sensiblement dans le même plan, le fil de coupe multiple forme, dans son état initial, un genre de bande plate désignée globalement par 6, qui peut être commodément enroulée sur une bobine réceptrice 7 dont la largeur entre joues correspond à celle de ladite bande 6.

A l'extrémité libre de cette bande plate 6, les différents brins 1, 2 et 3 peuvent être facilement séparés les uns des autres, sur une certaine longueur, par déchirement des voiles minces de matière 4 et 5 liant initialement ces brins dans la direction longitudinale de la bande 6.

Cette bande plate 6 peut être obtenue directement avec ses trois brins 1, 2 et 3 et ses deux voiles de matière 4 et 5, par un procédé d'extrusion. Elle est ainsi réalisable en matière synthétique, telle que polyamide.

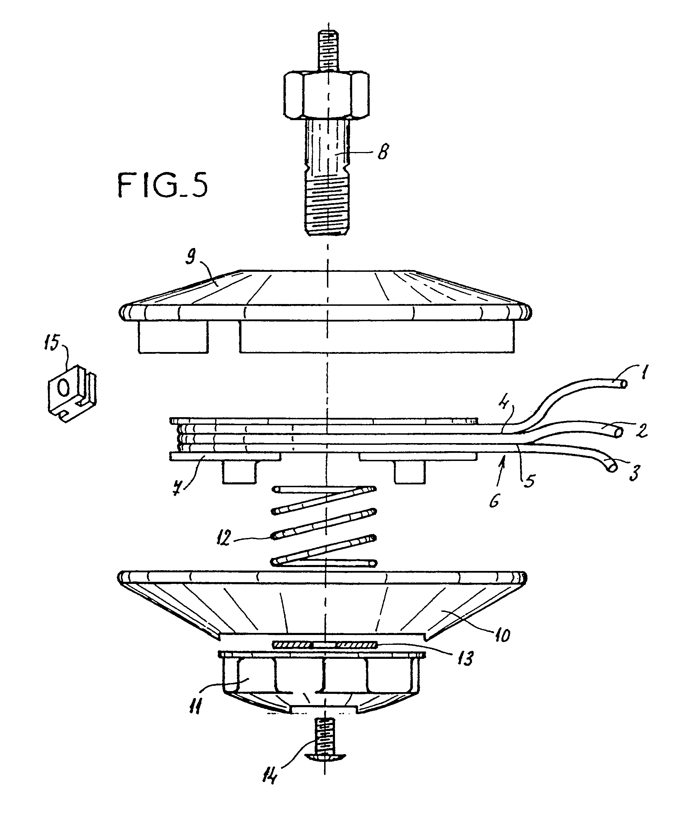

Pour l'utilisation d'un tel fil de coupe multiple, la bobine 7 chargée de la bande 6 est mise en place dans une tête rotative de débroussailleuse ou de taille-bordures, telle qu'illustrée sur la figure 5, qui comprend de façon connue un adaptateur 8, un capot supérieur 9, un capot inférieur 10 et un bouchon 11, ainsi que diverses pièces secondaires : ressort 12, rondelle 13, vis 14. Les extrémités des trois brins 1, 2 et 3, séparées les uns des autres, sont introduites respectivement au travers de trois oeillets de sortie 15 portés par le capot supérieur 9, pour former trois éléments coupants.

Comme le montre la figure 2, on peut aussi prévoir un fil de coupe à deux brins 1 et 2, liés par un voile mince de matière unique 4, pour servir de recharge à une tête rotative à deux fils coupants. Toujours selon le même principe, on peut encore réaliser un fil de coupe à quatre brins tel que montré à la figure 4, avec trois voiles de matière intermédiaires, destiné à une tête à quatre fils, etc..., le nombre de fils n'étant pas restrictif.

Comme il va de soi, et comme il ressort de ce qui précède, l'invention ne se limite pas aux seules formes de réalisation de ce fil de coupe multiple pour débroussailleuses et taille-bordures qui ont été décrites ci-dessus, à titre d'exemples ; elle en embrasse, au contraire, toutes les variantes respectant le même principe. En particulier, l'on ne s'éloignerait pas du cadre de l'invention :

    – en modifiant le nombre des fils élémentaires ou "brins" ;

    – en réalisant ces fils élémentaires avec une section autre que ronde, des sections variées telles que carrée, triangulaire ou en étoile étant aussi envisageables ;

    – en réalisant la liaison longitudinale entre les fils élémentaires sous toute forme : film, voile mince, cordon de colle ou soudure, soit continu, soit discontinu de manière à présenter des amorces de rupture facilitant la séparation des fils élémentaires ;

    – en utilisant toute matière appropriée pour la réalisation du fil multiple ;

    – en prévoyant toutes dispositions, autres qu'emballage du type "blister", pour le conditionnement de ce fil multiple.

## Revendications

1. Fil de coupe multiple pour débroussailleuses et taille-bordures, caractérisé en ce qu'il est constitué d'au moins deux fils élémentaires ou "brins" (1,2,3) liés longitudinalement les uns aux autres de façon séparable par au moins une partie mince déchirable (4,5), de manière à former dans son état initial un genre de bande plate ou de ruban (6), apte à être enroulé en spirale sur une bobine réceptrice (7) dont la largeur entre joues correspond à celle de ladite bande ou dudit ruban (6), tandis que ses fils élémentaires ou "brins" (1,2,3), une fois séparés sur une certaine longueur, sont aptes à constituer une pluralité d'éléments coupants.

2. Fil de coupe multiple pour débroussailleuses et taille-bordures, selon la revendication 1, caractérisé en ce qu'il comprend deux fils élémentaires ou "brins" (1,2), liés longitudinalement l'un à l'autre par une unique partie mince déchirable (4) de manière à former un genre de bande plate ou de ruban (6).

3. Fil de coupe multiple pour débroussailleuses et taille-bordures, selon la revendication 1, caractérisé en ce qu'il comprend au moins trois fils élémentaires ou "brins" (1,2,3), liés longitudinalement entre eux, deux à deux, par au moins deux parties minces déchirables (4,5) situées sensiblement dans le même plan, de manière à former un genre de bande plate ou de ruban (6).

4. Fil de coupe multiple pour débroussailleuses et taille-bordures, selon l'une quelconque des revendications 1 à 3, caractérisé en ce qu'il est obtenu directement par un procédé d'extrusion fournissant simultanément tous les fils élémentaires (1,2,3) et au moins un film ou voile mince déchirable (4,5) liant ces fils élémentaires longitudinalement les uns aux autres de manière à former un genre de bande plate ou de ruban (6).

5. Fil de coupe multiple pour débroussailleuses et taille-bordures, selon l'une quelconque des revendications 1 à 3, caractérisé en ce qu'il est réalisé à partir de fils élémentaires (1,2,3) initialement séparés, qui sont liés longitudinalement les uns aux autres par une opération d'assemblage telle que collage ou soudage de manière à former un genre de bande plate ou de ruban (6).

6. Fil de coupe multiple pour débroussailleuses et taille-bordures, selon l'une quelconque des revendications 1 à 5, caractérisé en ce qu'il est conditionné sous forme de bande plate ou de ruban (6) enroulé en spirale sur elle-même, donnant une "galette" qui peut notamment être placée dans un emballage du type "blister" constituant lui-même un dévidoir.

FIG.1

FIG.2

FIG.3

FIG.4

FIG_5

EP 0 435 795 A1

## Office européen des brevets

# RAPPORT DE RECHERCHE EUROPEENNE

Numero de la demande

EP 90 42 0574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4282653 (COMER)<br>* colonne 4, lignes 3 - 12; figures 6-8 * | 1-3, 5, 6 | A01D34/73 |
| Y | | 4 | |
| Y | FR-A-2315837 (KABUSHIKI KAISHA SHIKUTANI)<br>* page 6, lignes 10 - 29 *<br>--- | 4 | |
| A | US-A-4186239 (MIZE)<br>--- | | |
| A | US-A-4223441 (EVERTS)<br>--- | | |
| A | US-A-4711076 (LONG)<br>------ | | |

**DOMAINES TECHNIQUES RECHERCHES (Int. Cl.5)**

A01D

Le présent rapport a été établi pour toutes les revendications

| Lieu de la recherche | Date d'achèvement de la recherche | Examinateur |
|---|---|---|
| LA HAYE | 28 MARS 1991 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)